# EUROPÄISCHE PATENTSCHRIFT

(11) **EP 4 117 950 B1**
(45) Veröffentlichungstag und Bekanntmachung des Hinweises auf die Patenterteilung: **06.05.2026**
(21) Anmeldenummer: 21710931.3
(22) Anmeldetag: 08.03.2021
(51) Int. Cl.: B60K 35/10, B60K 35/22, B60K 35/60, B60K 35/80

(54) **ANZEIGEVORRICHTUNG UND KRAFTFAHRZEUG MIT EINER ANZEIGEVORRICHTUNG SOWIE VERFAHREN ZUM ANZEIGEN VON ANZEIGEINHALTEN**
DISPLAY DEVICE AND MOTOR VEHICLE COMPRISING A DISPLAY DEVICE, AND METHOD FOR DISPLAYING DISPLAY CONTENT
DISPOSITIF D'AFFICHAGE, VÉHICULE À MOTEUR AYANT UN DISPOSITIF D'AFFICHAGE ET PROCÉDÉ D'AFFICHAGE D'UN CONTENU D'AFFICHAGE

(30) Priorität: 12.03.2020 DE 102020106832
(43) Veröffentlichungstag der Anmeldung: 18.01.2023
(73) Patentinhaber: Audi AG, 85045 Ingolstadt (DE)
(72) Erfinder: WALL, Christian, 85122 Hitzhofen (DE)
(74) Vertreter: Hofstetter, Schurack & Partner
(86) Internationale Anmeldenummer: PCT/EP2021/055722
(87) Internationale Veröffentlichungsnummer: WO 2021/180617

(56) Entgegenhaltungen:
- WO-A1-2020/030465
- DE-A1- 10 115 050
- DE-A1- 102008 051 153
- DE-A1- 102015 011 614

## Beschreibung

Die Erfindung betrifft eine Anzeigevorrichtung mit einer Bildschirmeinrichtung zum Anzeigen von Anzeigeinhalten. Die Anzeigevorrichtung ist insbesondere dazu geeignet, die Anzeigeinhalte in einem Fahrgastinnenraum eines Kraftfahrzeugs anzuzeigen. Darüber hinaus betrifft die Erfindung ein Kraftfahrzeug mit einer Anzeigevorrichtung der im Folgenden beschriebenen Art sowie ein Verfahren zum Anzeigen der Anzeigeinhalte mittels der Anzeigevorrichtung.

Im Zuge der technischen Entwicklung und insbesondere im Zusammenhang mit der Entwicklung teil- oder vollautonomer Kraftfahrzeuge geht der Trend zu immer größeren Bildschirmen oder Bildschirmeinrichtungen im Fahrgastinnenraum, die dazu ausgelegt sind, einem Betrachter vielfältige Anzeigeinhalte oder Informationen bereitzustellen. Hierzu gehören nicht nur fahrt- und/oder fahrzeugbezogene Informationen, wie beispielsweise eine aktuelle Fahrtgeschwindigkeit und/oder Routendaten (Navigationsdaten), sondern auch Unterhaltungsangebote, wie Spiele und/oder Filme. Dies führt dazu, dass eine jeweilige Größe eines Bildschirms oder eines Displays nicht immer optimal zu dem jeweiligen Anzeigeinhalt passt. So kann es vorkommen, dass Informationen, die auf einer verhältnismäßig kleinen Fläche angezeigt werden könnten, auf einem unnötig großen Display oder Bildschirm angezeigt werden, der ansonsten die Sicht eines Betrachters auf das Verkehrsgeschehen ungünstig beeinflussen kann. Wird ein Bildschirm kleiner gewählt, um diesen Effekt zu vermeiden, kann es vorkommen, dass beispielsweise Filme nicht in einer gewünschten Bildgröße angezeigt werden können. Es besteht also ein Bedarf an Anzeigevorrichtungen mit größenvariablen Bildschirmen.

Aus der DE 10 2014 006 338 A1 und der DE 101 15 050 A1 sind jeweils Anzeigevorrichtungen mit größenvariablen Bildschirmen für Kraftfahrzeuge oder sonstige Fortbewegungsmittel bekannt. Die Bildschirme sind jeweils aus einem Gehäuse heraus in einen Fahrgastinnenraum hinein verschiebbar gelagert. Da es sich bei den beschriebenen Bildschirmen um flexible oder biegsame Bildschirme handelt, muss jeweils eine mechanische Stützelementanordnung vorgesehen werden, um den jeweiligen Bildschirm mechanisch zu stützen. Die Stützelementanordnungen werden bei einem Verschieben eines jeweiligen Bildschirms mit diesem mitgeführt oder mitgeschleppt. Nachteilig bei den beschriebenen Anzeigevorrichtungen ist es, dass eine jeweilige Stützelementanordnung bewegliche Teile aufweist und somit verschleißanfällig ist.

Auch die DE 10 2015 011 614 A1 beschreibt eine Anzeigevorrichtung mit einem flexiblen Bildschirm für ein Kraftfahrzeug. Ein flexibles Anzeigeelement ist durch ein plattenförmiges Stützelement gestützt und kann durch ein Verschwenken des Stützelements in unterschiedliche Positionen gebracht werden. Ein Gehäuse, innerhalb dessen der Bildschirm verstaut und so vor äußeren Einflüssen geschützt sein kann, ist nachteilig nicht vorgesehen.

Aus der WO 2020/030465 A1 ist ein Kraftfahrzeug mit einer Anzeigevorrichtung bekannt, wobei die Anzeigevorrichtung in einem Laderaum des Kraftfahrzeugs angeordnet ist.

Aus der DE 10 2008 051153 A1 ist eine Bildschirmverstelleinrichtung für ein Kraftfahrzeug bekannt.

Der Erfindung liegt die Aufgabe zugrunde, eine verschleißarm ausgestaltete und robuste Anzeigevorrichtung mit einem größenverstellbaren Bildschirm für ein Kraftfahrzeug bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist eine Anzeigevorrichtung der eingangs beschriebenen Art bereitgestellt. Die Anzeigevorrichtung umfasst eine Bildschirmeinrichtung oder einen Bildschirm und ein Verstauvolumen. Das Verstauvolumen kann als ein Verstaubehälter oder ein Gehäuse, insbesondere ein zumindest bereichsweise geöffnetes Gehäuse mit zumindest einer Öffnung ausgebildet sein. Das Verstauvolumen kann eine oder mehrere offene Seiten aufweisen. Die Bildschirmeinrichtung ist durch die Öffnung des Verstauvolumens hindurch entlang einer vorbestimmten Verschieberichtung zwischen einer Verstauposition und zumindest einer von der Verstauposition verschiedenen Gebrauchsposition aus einem Innenraum des Verstauvolumens heraus und in den Innenraum des Verstauvolumens hinein verschiebbar gelagert.

Für den Fall, dass die Anzeigevorrichtung in einem Kraftfahrzeug zum Einsatz kommt, kann es bevorzugt vorgesehen sein, dass die Anzeigevorrichtung im Bereich einer Schalttafel oder eines Armaturenbretts eines Kraftfahrzeugs angeordnet ist. Bevorzugt ist die Anzeigevorrichtung derart in dem Kraftfahrzeug verbaut, dass die Bildschirmeinrichtung aus einer für einen jeweiligen Insassen des Kraftfahrzeugs oder Betrachter nicht oder nicht vollständig sichtbaren Verstauposition in eine zumindest teilweise sichtbare Gebrauchsposition in den Fahrgastinnenraum hinein verschiebbar ist.

Durch die verschiebbare Lagerung des Displays kann ein jeweiliger Anzeigebereich bedarfsgerecht und an einen jeweiligen Anzeigeinhalt angepasst bereitgestellt werden. So kann eine jeweilige Größe eines Anzeigebereichs bedarfsgerecht gewählt und eingestellt werden. Beispielsweise kann die jeweilige Größe der Bildschirmeinrichtung in Abhängigkeit von einem jeweiligen Platzbedarf eines jeweiligen Anzeigeinhalts gewählt und eingestellt sein. Mit anderen Worten kann eine jeweilige Gebrauchsposition der Bildschirmeinrichtung bedarfsgerecht und an einen jeweiligen Anzeigeinhalt angepasst ausgewählt sein.

Die Bildschirmeinrichtung umfasst bevorzugt ein Display zum Anzeigen von Anzeigeinhalten. Bevorzugt weist das Display eine durchgehende Anzeigefläche auf. Bevorzugt ist die Anzeigefläche durch eine Anzeigeschicht zum Anzeigen pixelbasierter Anzeigeinhalte gebildet oder von dieser bereitgestellt. Eine solche Anzeigeschicht kann beispielsweise eine OLED-Schicht sein (OLED - organic light emitting diode).

Erfindungsgemäß weist die Anzeigevorrichtung ein Stützelement auf, das sich entlang der vorbestimmten Verschieberichtung ausgehend von der Öffnung von dem Innenraum des Verstauvolumens weg erstreckt und dazu ausgebildet ist, die Bildschirmeinrichtung in einem zumindest teilweise aus dem Verstauvolumen herausgeschobenen Zustand mechanisch zu stützen. Das Stützelement ist als ein feststehendes Stützelement ausgebildet, welches beispielsweise als eine Stützplatte oder ein Stützarm oder eine Anordnung aus zumindest zwei Stützarmen realisiert sein kann. Das Stützelement ist an der Öffnung des Verstauvolumens angesetzt. Ausgehend von der Öffnung oder ausgehend von einer Ansatzposition an der Öffnung erstreckt sich das Stützelement von dem Innenraum des Verstauvolumens oder Verstaubehälters weg. Das Stützelement kann auch als ein Stützkeil ausgebildet sein, wobei eine Stirnseite des Stützkeils sich entlang der vorbestimmten Verschieberichtung ausgehend von der Öffnung von dem Innenraum des Verstauvolumens weg erstreckt. In jedem Fall ist das Stützelement dazu ausgebildet, die Bildschirmeinrichtung in einem zumindest teilweise aus dem Verstauvolumen herausgeschobenen Zustand mechanisch zu stützen.

Im Gegensatz zu den bekannten Lösungen ist das Stützelement feststehend oder mit einer feststehenden Höhe ausgebildet. Mit anderen Worten ist das Stützelement selbst in der Form nicht veränderlich. Dies reduziert vorteilhaft die Verschleißanfälligkeit der gesamten Anzeigevorrichtung.

Außerdem sieht die Erfindung vor, dass die Bildschirmeinrichtung einen ersten Anzeigebereich und einen an den ersten Anzeigebereich anschließenden zweiten Anzeigebereich aufweist. Der erste Anzeigebereich der Bildschirmeinrichtung weist eine erste Höhe und eine erste Eigensteifigkeit auf. Der zweite Anzeigebereich weist eine zweite Höhe und eine zweite Eigensteifigkeit auf, wobei die zweite Eigensteifigkeit bezüglich der ersten Eigensteifigkeit herabgesetzt ist. Die zweite Eigensteifigkeit kann um 30 bis 70 Prozent gegenüber der ersten Eigensteifigkeit herabgesetzt sein. Bevorzugt beträgt die zweite Eigensteifigkeit 50 Prozent der ersten Eigensteifigkeit. Mit anderen Worten kann die Bildschirmeinrichtung im Bereich des zweiten Anzeigebereichs bevorzugt halb so eigensteif sein, wie innerhalb des ersten Anzeigebereichs. Bevorzugt ist die erste Eigensteifigkeit derart gewählt, dass die Bildschirmeinrichtung innerhalb des ersten Anzeigebereichs selbsttätig, insbesondere ohne eine äußere mechanische Stützung, standfest oder formstabil ausgebildet ist. Im Gegensatz dazu ist die zweite Eigensteifigkeit bevorzugt derart ausgewählt, dass die Bildschirmeinrichtung im Bereich des zweiten Anzeigebereichs nicht standfest ist. Mit anderen Worten ist die Bildschirmeinrichtung innerhalb des zweiten Anzeigebereichs biegsam oder flexibel ausgestaltet. Mit anderen Worten kann die Bildschirmeinrichtung innerhalb des zweiten Anzeigebereichs unter Aufbringung einer von außen wirkenden Kraft, wie sie beispielsweise durch eine Touch-Bedienung des Betrachters auf die Bildschirmeinrichtung aufgebracht werden kann, krümmbar sein.

Erfindungsgemäß ist die Bildschirmeinrichtung zumindest bereichsweise innerhalb des zweiten Anzeigebereichs gekrümmt in dem Verstauvolumen angeordnet. Durch die beschriebene Krümmbarkeit der Bildschirmeinrichtung innerhalb des zweiten Anzeigebereichs ergibt sich der Vorteil, dass die Bildschirmeinrichtung besonders platzsparend und gekrümmt oder sogar aufgerollt in dem Verstauvolumen oder Verstaubehälter verstaut sein kann.

Zu der Erfindung gehören auch Ausführungsformen, durch die sich zusätzliche Vorteile ergeben.

Eine Ausführungsform sieht vor, dass das Stützelement zumindest ein Führungselement aufweist, wobei die Bildschirmeinrichtung mittels des zumindest einen Führungselements entlang der vorbestimmten Verschieberichtung in einer Verlängerung des Stützelements zwangsgeführt ist. Das Führungselement kann beispielsweise als ein Linearführungselement ausgebildet sein. Ein Linearführungselement kann beispielsweise als eine die Bildschirmeinrichtung zumindest teilweise umfassende Klammer ausgebildet sein. Besonders bevorzugt weist die Bildschirmeinrichtung seitliche Langlochführungen auf, in die seitliche Schenkel der beschriebenen Klammer eingreifen. So ist vorteilhaft gewährleistet, dass es bei einem Verschieben entlang der vorbestimmten Verschieberichtung nicht zu einem Verkanten oder Verhaken der Bildschirmeinrichtung kommt. Dies ist insbesondere dann von Vorteil, wenn die Bildschirmeinrichtung aus der Verstauposition hinaus in eine über das Stützelement oder über die feste Höhe des Stützelements hinausragende Gebrauchsposition verschoben werden soll.

Eine weitere Ausführungsform sieht vor, dass die Anzeigevorrichtung einen Schwenkmechanismus aufweist. Der Schwenkmechanismus ist dazu ausgebildet, die Bildschirmeinrichtung in Abhängigkeit von einem Steuersignal zwischen der Verstauposition und der zumindest einen von der Verstauposition verschiedenen Gebrauchsposition zu verschieben. Das Steuersignal kann beispielsweise mit einem Anzeigeinhalt gekoppelt sein. Mit anderen Worten kann eine Steuervorrichtung, beispielsweise eine Steuervorrichtung des Kraftfahrzeugs, dazu ausgebildet sein, das Steuersignal in Abhängigkeit von einer zum Anzeigen des jeweiligen Anzeigeinhalts erforderlichen Größe der Bildschirmeinrichtung zu erzeugen und an die Anzeigevorrichtung zu übermitteln.

Bevorzugt ist der Schwenkmechanismus in dem Innenraum des Verstauvolumens angeordnet und dazu ausgebildet, die Bildschirmeinrichtung von der Verstauposition stufenlos in Abhängigkeit von dem Steuersignal in zumindest eine Zwischenposition zu schieben und dort zu halten. Der Schwenkmechanismus kann beispielsweise eine zentrale Antriebseinheit und einen Schwenkarm aufweisen. Bevorzugt ist der Schwenkarm an einem ersten Ende mit der Antriebseinheit und einem dem ersten Ende gegenüberliegend angeordneten zweiten Ende mit einem Fußbereich der Bildschirmeinrichtung verbunden. Eine beispielhafte Anordnung von Antriebseinheit und Schwenkarm wird im weiteren Verlauf detailliert beschrieben.

Bevorzugt ist die erste Eigensteifigkeit durch eine an der Bildschirmeinrichtung innerhalb des ersten Anzeigebereichs angeordnete materiell und/oder strukturell versteifte Trägerschicht bewirkt. Mit anderen Worten ist an einer der Anzeigeschicht gegenüberliegend angeordneten Rückseite der Bildschirmeinrichtung innerhalb des ersten Anzeigebereichs eine versteifte Trägerschicht angebracht. Die Trägerschicht kann beispielsweise aus einem Hartplastik oder einem Aluminium oder einer Aluminiumlegierung gebildet sein. Sie kann auch Strukturelemente oder Streben zur strukturellen Versteifung aufweisen. Wie oben beschrieben, ist die Anzeigeschicht bevorzugt als eine flexible OLED-Schicht ausgebildet. Eine solche OLED-Schicht ist flexibel oder biegsam. Innerhalb des ersten Anzeigebereichs weist die Bildschirmeinrichtung bevorzugt einen Schichtverbund aus OLED-Schicht und versteifter Trägerschicht auf, während innerhalb des zweiten Anzeigebereichs die versteifte Trägerschicht ganz oder teilweise fehlt und die Bildschirmeinrichtung lediglich die flexible OLED-Schicht aufweist. Hierdurch kann eine durchgehende Anzeigeschicht bereitgestellt sein, die dennoch bereichsweise unterschiedliche Eigensteifigkeiten aufweist.

Eine besonders vorteilhafte Weiterbildung sieht vor, dass die feststehende Höhe des Stützelements zumindest der ersten Höhe des ersten Anzeigebereichs entspricht, wobei eine Oberkante des ersten Anzeigebereichs in der Verstauposition mit einer Oberkante des Stützelements bündig abschließt. Mit anderen Worten ist das Stützelement im Wesentlichen genauso hoch, wie der erste Anzeigebereich in der Verstauposition. In der Gebrauchsposition und/oder der Zwischenposition hingegen ragt bevorzugt der erste Anzeigebereich zumindest abschnittsweise über die Oberkante des Stützelements hinaus, wobei der zweite Anzeigebereich, welcher ja flexibel ausgestaltet ist, zumindest abschnittsweise durch das Stützelement gestützt ist und so vorteilhaft beispielsweise einer Touchbedienung durch einen Benutzer standhält.

Bevorzugt weist die Anzeigevorrichtung also eine Bildschirmeinrichtung mit einer berührungssensitiven Sensorschicht auf. Mit anderen Worten ist die Bildschirmeinrichtung als ein berührungssensitives Display oder als ein Touchdisplay oder ein Touchscreen ausgebildet. Durch das beschriebene Stützelement ist die Bildschirmeinrichtung derart gestützt, dass eine Touchbedienung der Bildschirmeinrichtung ermöglicht ist.

Zu der Erfindung gehört auch ein Kraftfahrzeug mit einer Anzeigevorrichtung der beschriebenen Art. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Wie eingangs beschrieben, ist die Anzeigevorrichtung bevorzugt im Bereich einer Schalttafel oder eines Armaturenbretts des Kraftfahrzeugs angeordnet. Insbesondere kann die Anzeigevorrichtung derart unter einer Schalttafel verdeckt angeordnet sein, dass die Bildschirmeinrichtung in der Verstauposition nicht oder nur teilweise für einen Fahrzeuginsassen sichtbar ist.

Zu der Erfindung gehört darüber hinaus ein Verfahren zum Anzeigen von Anzeigeeinhalten mittels einer Anzeigevorrichtung, wobei die Anzeigevorrichtung eine Bildschirmeinrichtung und ein Verstauvolumen umfasst, wobei die Bildschirmeinrichtung durch eine Öffnung des Verstauvolumens hindurch entlang einer vorbestimmten Verschieberichtung zwischen einer Verstauposition und zumindest einer von der Verstauposition verschiedenen Gebrauchsposition aus einem Innenraum des Verstauvolumens heraus und in den Innenraum des Verstauvolumens hinein verschiebbar gelagert ist.

Das erfindungsgemäße Verfahren ist dadurch gekennzeichnet, dass ein Stützelement bereitgestellt wird, welches sich entlang der vorbestimmten Verschieberichtung ausgehend von der Öffnung von dem Innenraum des Verstauvolumens weg erstreckt und die Bildschirmeinrichtung in einem zumindest teilweise aus dem Verstauvolumen herausgeschobenen Zustand mechanisch stützt.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Anzeigevorrichtung und/oder des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Zu der Erfindung gehört auch die oben erwähnte Steuervorrichtung für das Kraftfahrzeug. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (field programmable gate array) und/oder zumindest einen DSP (digital signal processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode in einem Datenspeicher der Prozessoreinrichtung gespeichert sein.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Längsschnittdarstellung einer Anzeigevorrichtung, wobei sich eine Bildschirmeinrichtung in einer möglichen Verstauposition befindet;
- Fig. 2: eine schematische Querschnittdarstellung von Bildschirmeinrichtung und Stützelement;
- Fig. 3: eine schematische Darstellung einer Anzeigevorrichtung mit zumindest teilweise aus einem Verstauvolumen herausgeschobener Bildschirmeinrichtung;
- Fig. 4: eine schematische Darstellung eines Ausschnitts eines Kraftfahrzeugs mit in dem Kraftfahrzeug angeordneter Anzeigevorrichtung; und
- Fig. 5: eine schematische Darstellung eines Verfahrens zum Anzeigen von Anzeigeinhalten.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

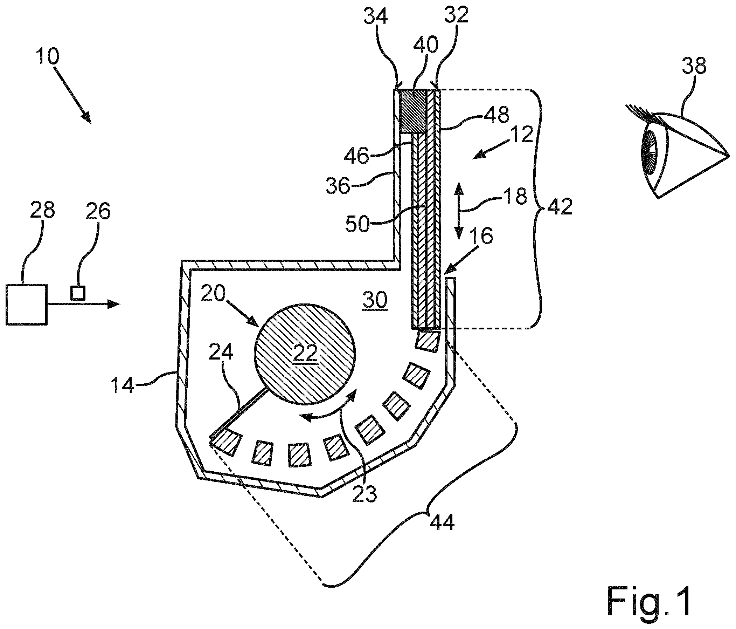

Fig. 1 zeigt eine schematische Längsschnittdarstellung einer Anzeigevorrichtung 10. Die Anzeigevorrichtung 10 umfasst eine Bildschirmeinrichtung 12 und ein als ein Verstaubehälter ausgestaltetes Verstauvolumen 14. Die Bildschirmeinrichtung 12 kann durch eine Öffnung 16 des Verstauvolumens 14 hindurch entlang einer vorbestimmten Verschieberichtung 18 zwischen einer Verstauposition und einer Gebrauchsposition verschoben oder hin- und hergeschoben werden. Die Anzeigevorrichtung 10 kann einen Schwenkmechanismus 20 mit einer Antriebseinheit 22 und einem an der Antriebseinheit 22 gelagerten Schwenkarm 24 aufweisen. Der Schwenkarm 24 kann an einem Ende der Bildschirmeinrichtung 12 befestigt sein.

Um ein Verschieben der Bildschirmeinrichtung 12 entlang der Verschieberichtung 18 zu realisieren, kann von der Antriebseinheit 22 eine Rotationskraft 23 auf den Schwenkarm 24 und somit auf das Ende der Bildschirmeinrichtung 12 übertragen werden. Die Rotationskraft 23 kann beispielsweise in Abhängigkeit von einem Steuersignal 26, welches von einer Steuervorrichtung 28 an die Anzeigevorrichtung 10 übermittelt wird, erzeugt werden. Bevorzugt ist der Schwenkmechanismus 20 in einem Innenraum 30 der Anzeigevorrichtung 10, insbesondere des Verstauvolumens 14, angeordnet und kann die Bildschirmeinrichtung 12 stufenlos und in Abhängigkeit von dem Steuersignal 26 entlang der Verschieberichtung 18 aus dem Verstauvolumen 14 hinausschieben und in das Verstauvolumen 14 hineinziehen.

Darüber hinaus zeigt Fig. 1 ein Stützelement 36, das an der Öffnung 16 ansetzt und sich von dem Innenraum 30 des Verstauvolumens 14 weg erstreckt.

Fig. 1 zeigt beispielhaft eine Anordnung der Bildschirmeinrichtung 12 in einer Verstauposition. Die gezeigte Verstauposition ist dadurch gekennzeichnet, dass eine obere Kante 32 der Bildschirmeinrichtung 12 bündig mit einer oberen Kante 34 des Stützelements 36 abschließt. Für ein Auge 38 eines Betrachters oder Benutzers ist das Stützelement 36 in der in Fig. 1 gezeigten Verstauposition demnach nicht sichtbar.

In der in Fig. 1 gezeigten Verstauposition ragt ein erster Anzeigebereich 42 aus dem Innenraum 30 des Verstauvolumens 14 zumindest zum größten Teil heraus, während ein zweiter Anzeigebereich 44 gekrümmt innerhalb des Verstauvolumens 14 verstaut ist. Um die in Fig. 1 gezeigte Krümmung innerhalb des zweiten Anzeigebereichs 44 realisieren zu können, kann die Bildschirmeinrichtung 12 innerhalb des zweiten Anzeigebereichs 44 flexibel oder biegsam ausgestaltet sein. Innerhalb des ersten Anzeigebereichs 42 ist die Bildschirmeinrichtung 12 hingegen bevorzugt mit einer bezüglich des zweiten Anzeigebereichs 44 erhöhten Eigensteifigkeit ausgestattet. Diese Erhöhung der Eigensteifigkeit kann durch das rückseitige Anbringen einer Trägerschicht 46 erzielt sein. Auf einer der Trägerschicht 46 abgewandten und dem Auge 38 des Betrachters zugewandten Seite der Bildschirmeinrichtung 12 ist eine Anzeigeschicht 48 zum Anzeigen pixelbasierter Anzeigeinhalte an der Bildschirmeinrichtung 12 angeordnet. Die Anzeigeschicht 48 kann sich über eine gesamte Länge der Bildschirmeinrichtung, also über ersten und zweiten Anzeigebereich 42, 44 hinweg erstrecken. Somit ist eine durchgängige Anzeige von Anzeigeinhalten gewährleistet.

Zwischen Trägerschicht 46 und Anzeigeschicht 48 kann ein Langloch 50 in die Bildschirmeinrichtung 12 integriert sein. Das Langloch 50 kann als eine Eingriffsstelle für ein Führungselement 40 dienen.

Um eine Führung der Bildschirmeinrichtung 12 bei einem Verschieben entlang der Verschieberichtung 18 zu realisieren, kann also ein Führungselement 40 vorgesehen sein.

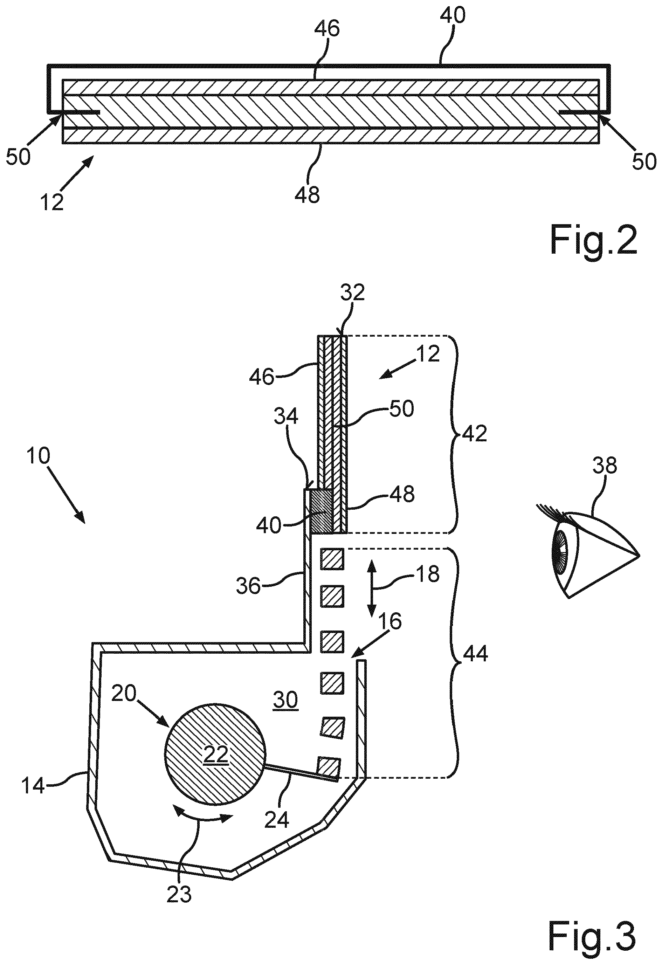

Unter Bezugnahme auf die im Zusammenhang mit Fig. 1 bezeichneten und beschriebenen Komponenten zeigt Fig. 2 eine schematische Querschnittsdarstellung der Bildschirmeinrichtung 12 mit einem Führungselement 40, welches seitlich in einem Langloch 50 der Bildschirmeinrichtung 12 geführt ist.

Unter Bezugnahme auf die im Zusammenhang mit den Fig. 1 und 2 bezeichneten und beschriebenen Komponenten zeigt Fig. 3 eine Anordnung der Bildschirmeinrichtung 12 in einer von der Verstauposition verschiedenen Gebrauchsposition. In der Gebrauchsposition kann die Bildschirmeinrichtung 12 derart aus dem Verstauvolumen 14 herausgeschoben sein, dass der erste Anzeigebereich 42 komplett oder zumindest fast vollständig über das Stützelement 36 hinausragt. Mit anderen Worten ragt der erste Anzeigebereich 42 in der in Fig. 3 gezeigten Gebrauchsposition zumindest abschnittsweise über die Oberkante 34 des Stützelements 36 hinaus. Außerdem wird der zweite Anzeigebereich 44 zumindest abschnittsweise durch das Stützelement 36 gestützt. Somit kann in der Gebrauchsposition dem Auge 38 des Betrachters eine vergrößerte Anzeigefläche bereitgestellt sein.

In der beschriebenen Verstauposition kann der Betrachter beispielsweise eine Navigationssoftware auf einer als Touch-Screen ausgebildeten Bildschirmeinrichtung 12 auswählen. Infolge dieser Auswahl kann die Steuervorrichtung 28 ein entsprechendes Steuersignal 26 an die Anzeigevorrichtung 10 aussenden. Hieraufhin kann die Antriebseinheit 22 eine Rotationskraft 23 auf den Schwenkarm 24 ausüben, und so die Bildschirmeinrichtung 12 von der Verstauposition in die in Fig. 3 gezeigte Gebrauchsposition verschieben. Eine Kartendarstellung der ausgewählten Navigationssoftware kann dann vorteilhaft vergrößert dargestellt werden.

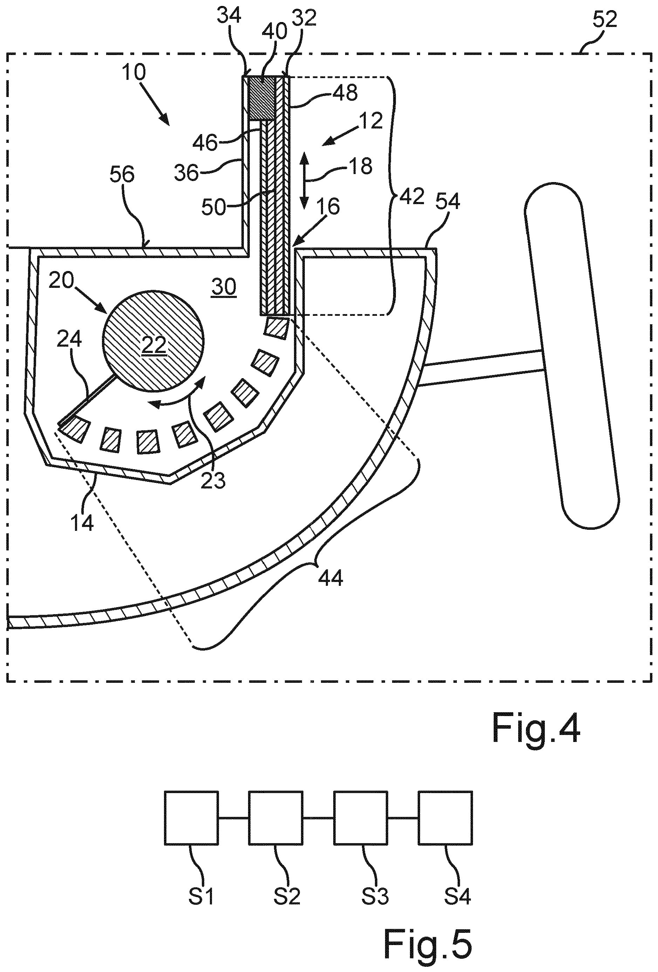

Fig. 4 zeigt unter Bezugnahme auf die in den Figuren 1 bis 3 gezeigten und beschriebenen Komponenten eine beispielhafte Anordnungsmöglichkeit der Anzeigevorrichtung 10 in einem Kraftfahrzeug 52. Die Anzeigevorrichtung 10 ist in der Fig. 4 beispielhaft in einer Schalttafel 54 des Kraftfahrzeugs 52 integriert. Mit anderen Worten bildet eine Oberfläche 56 der Schalttafel 54 einen Teil des Verstauvolumens 14 oder des Verstaubehälters aus. Die Bildschirmeinrichtung 12 kann also durch eine Öffnung 16 innerhalb der Oberfläche 56 der Schalttafel 54 verschoben werden.

Fig. 5 zeigt eine schematische Darstellung eines Verfahrens zum Anzeigen von Anzeigeinhalten mittels einer Anzeigevorrichtung 10. In einem ersten Verfahrensschritt S1 wird eine Anzeigevorrichtung 10 mit einer Bildschirmeinrichtung 12 und einem Verstauvolumen 14 bereitgestellt, wobei die Bildschirmeinrichtung 12 durch eine Öffnung 16 des Verstauvolumens 14 hindurch entlang einer vorbestimmten Verschieberichtung 18 zwischen einer Verstauposition und zumindest einer von der Verstauposition verschiedenen Gebrauchsposition aus einem Innenraum 30 des Verstauvolumens 14 heraus und in den Innenraum 30 des Verstauvolumens 14 hinein verschiebbar gelagert ist. In einem Verfahrensschritt S2 wird ein Stützelement 36 für die Anzeigevorrichtung 10 bereitgestellt. Das Stützelement 36 erstreckt sich entlang der vorbestimmten Verschieberichtung 18 ausgehend von der Öffnung 16 von dem Innenraum 30 des Verstauvolumens 14 weg. In einem Verfahrensschritt S3 wird die Bildschirmeinrichtung in Abhängigkeit von einem Steuersignal 26 aus dem Innenraum 30 herausgeschoben. Hierbei stützt das Stützelement 36 die Bildschirmeinrichtung 12 mechanisch. Auf der so herausgeschobenen Bildschirmeinrichtung 12 können nun vergrößerte Anzeigeinhalte in einem Verfahrensschritt S4 angezeigt werden.

In einer bevorzugten Anordnung befindet sich also ein erster starrer Anteil oder ein erster Anzeigebereich der beschriebenen Bildschirmeinrichtung außerhalb einer Schalttafelstruktur eines Kraftfahrzeugs. Ein zweiter Anteil oder zweiter Anzeigebereich ist bevorzugt flexibel ausgelegt und kann mittels einer geeigneten Kinematik oder mittels eines Schwenkmechanismus ausgefahren werden. Das Gehäuse oder das Verstauvolumen kann so ausgelegt sein, dass es eine Stützstruktur oder ein Stützelement auf der Rückseite aufweist, die so hoch ist, wie der starre Anteil in einem nicht ausgefahrenen Zustand oder in einer Verstauposition. Optisch ist die Stützstruktur für einen Betrachter dann nicht wahrzunehmen. Wird der flexible Anteil oder der zweite Anzeigebereich ausgefahren, so kann sich die ganze Einheit oder die ganze Bildschirmeinrichtung an der Stützstruktur des Gehäuses im Falle einer Touchbedienung abstützen.

Insgesamt zeigen die Beispiele, wie durch die Erfindung eine Anordnung für ein ausfahrbares oder verschiebbar gelagertes flexibles oder biegsames Display bereitgestellt werden kann.

## Patentansprüche

1. Anzeigevorrichtung (10), umfassend eine Bildschirmeinrichtung (12) und ein Verstauvolumen (14), wobei die Bildschirmeinrichtung (12) durch eine Öffnung (16) des Verstauvolumens (14) hindurch entlang einer vorbestimmten Verschieberichtung (18) zwischen einer Verstauposition und zumindest einer von der Verstauposition verschiedenen Gebrauchsposition aus einem Innenraum (30) des Verstauvolumens (14) heraus und in den Innenraum (30) des Verstauvolumens (14) hinein verschiebbar gelagert ist, wobei
die Anzeigevorrichtung (10) ein Stützelement (36) aufweist, das sich entlang der vorbestimmten Verschieberichtung (18) ausgehend von der Öffnung (16) von dem Innenraum (30) des Verstauvolumens (14) weg erstreckt und dazu ausgebildet ist, die Bildschirmeinrichtung (12) in einem zumindest teilweise aus dem Verstauvolumen (14) heraus geschobenen Zustand mechanisch zu stützen, **dadurch gekennzeichnet, dass** die Bildschirmeinrichtung (12) einen ersten Anzeigebereich (42) mit einer ersten Höhe und einer ersten Eigensteifigkeit und einen an den ersten Anzeigebereich (42) anschließenden zweiten Anzeigebereich (44) mit einer zweiten Höhe und einer bezüglich der ersten Eigensteifigkeit herabgesetzten zweiten Eigensteifigkeit aufweist, wobei die Bildschirmeinrichtung (12) zumindest bereichsweise innerhalb des zweiten Anzeigebereichs (44) gekrümmt in dem Verstauvolumen (14) angeordnet ist.

2. Anzeigevorrichtung (10) nach Anspruch 1, wobei das Stützelement (36) zumindest ein Führungselement (40) aufweist, wobei die Bildschirmeinrichtung (12) mittels des zumindest einen Führungselements (40) entlang der vorbestimmten Verschieberichtung (18) in einer Verlängerung des Stützelements (36) zwangsgeführt ist.

3. Anzeigevorrichtung (10) nach einem der vorhergehenden Ansprüche, aufweisend einen Schwenkmechanismus (20), wobei der Schwenkmechanismus (20) dazu ausgebildet ist, die Bildschirmeinrichtung (12) in Abhängigkeit von einem Steuersignal (26) zwischen der Verstauposition und der zumindest einen Gebrauchsposition zu verschieben.

4. Anzeigevorrichtung (10) nach Anspruch 3, wobei der zumindest eine Schwenkmechanismus (20) in dem Innenraum (30) des Verstauvolumens (14) angeordnet und dazu ausgebildet ist, die Bildschirmeinrichtung (12) von der Verstauposition stufenlos in Abhängigkeit von dem Steuersignal (26) in zumindest eine Zwischenposition zu schieben und dort zu halten.

5. Anzeigevorrichtung (10) nach einem der vorhergehenden Ansprüche, wobei die erste Eigensteifigkeit durch eine an der Bildschirmeinrichtung (12) innerhalb des ersten Anzeigebereichs (42) angeordnete materiell und/oder strukturell versteifte Trägerschicht (46) bewirkt ist.

6. Anzeigevorrichtung (10) nach einem der vorhergehenden Ansprüche, wobei eine Höhe des Stützelements (36) zumindest der ersten Höhe des ersten Anzeigebereichs (42) entspricht, wobei eine Oberkante (32) des ersten Anzeigebereichs (42) in der Verstauposition mit einer Oberkante (34) des Stützelements (36) bündig abschließt und wobei in der Gebrauchsposition und/oder der Zwischenposition der erste Anzeigebereich (42) zumindest abschnittsweise über die Oberkante (34) des Stützelements (36) hinausragt und der zweite Anzeigebereich (44) zumindest abschnittsweise durch das Stützelement (36) gestützt ist.

7. Anzeigevorrichtung (10) nach einem der vorhergehenden Ansprüche, wobei die Bildschirmeinrichtung (12) eine berührungssensitive Sensorschicht aufweist.

8. Kraftfahrzeug (52) mit einer Anzeigevorrichtung (10) nach einem der vorhergehenden Ansprüche.

9. Verfahren zum Anzeigen von Anzeigeinhalten mittels einer Anzeigevorrichtung (10), wobei die Anzeigevorrichtung (10) eine Bildschirmeinrichtung (12) und ein Verstauvolumen (14) umfasst, wobei die Bildschirmeinrichtung (12) durch eine Öffnung (16) des Verstauvolumens (14) hindurch entlang einer vorbestimmten Verschieberichtung (18) zwischen einer Verstauposition und zumindest einer von der Verstauposition verschiedenen Gebrauchsposition aus einem Innenraum (30) des Verstauvolumens (14) heraus und in den Innenraum (30) des Verstauvolumens (14) hinein verschiebbar gelagert ist, wobei ein Stützelement (36) bereitgestellt wird, welches sich entlang der vorbestimmten Verschieberichtung (18) ausgehend von der Öffnung (16) von dem Innenraum (30) des Verstauvolumens (14) weg erstreckt und die Bildschirmeinrichtung (12) in einem zumindest teilweise aus dem Verstauvolumen (14) heraus geschobenen Zustand mechanisch stützt, **dadurch gekennzeichnet, dass** die Bildschirmeinrichtung (12) mit einem ersten Anzeigebereich (42) mit einer ersten Höhe und einer ersten Eigensteifigkeit und einem an den ersten Anzeigebereich (42) anschließenden zweiten Anzeigebereich (44) mit einer zweiten Höhe und einer bezüglich der ersten Eigensteifigkeit herabgesetzten zweiten Eigensteifigkeit bereitgestellt wird, wobei die Bildschirmeinrichtung (12) zumindest bereichsweise innerhalb des zweiten Anzeigebereichs (44) gekrümmt in dem Verstauvolumen (14) angeordnet wird.

## Claims

1. A display device (10) comprising a screen apparatus (12) and a storage volume (14), wherein the screen apparatus (12) is supported through an opening (16) in the storage volume (14) along a predetermined direction of movement (18) between a stowage position and at least one operating position that differs from the stowage position to move out of an interior (30) of the storage volume (14) and into the interior (30) of the storage volume (14), wherein
the display device (10) has a support element (36) which extends along the predetermined direction of movement (18) away from the opening (16) of the interior (30) of the storage volume (14), and is adapted to mechanically support the screen apparatus (12) in a state in which it is at least partially pushed out of the storage volume (14), wherein
the screen apparatus (12) has a first display area (42) having a first height and a first inherent stiffness and a second display area (44) adjacent to the first display area (42) having a second height and a second inherent stiffness that is reduced relative to the first inherent stiffness, wherein the screen apparatus (12) is arranged in the stowage volume (14) in a curved manner at least in some areas within the second display area (44).

2. The display device (10) of claim 1, wherein the support element (36) comprises at least one guide element (40), wherein the screen apparatus (12) is positively guided by means of the at least one guide element (40) along the predetermined direction of movement (18) in an extension of the support element (36).

3. The display device (10) of any one of the preceding claims, comprising a swivel mechanism (20), wherein the swivel mechanism (20) is adapted to move the screen apparatus (12) between the stowed position and the at least one operating position in function of a control signal (26).

4. The display device (10) of claim 3, wherein the at least one swivel mechanism (20) is arranged in the interior (30) of the storage volume (14) and adapted to move the screen apparatus (12) continuously from the storage position to at least one intermediate position in function of the control signal (26) and to hold it there.

5. The display device (10) of any one of the preceding claims, wherein the first inherent stiffness is effected by a materially and/or structurally stiffened support layer (46) arranged on the screen apparatus (12) within the first display area (42).

6. The display device (10) of any one of the preceding claims, wherein a height of the support element (36) corresponds at least to the first height of the first display area (42), wherein an upper edge (32) of the first display area (42) in the stowed position is flush with an upper edge (34) of the support element (36) and wherein, in the operating position and/or the intermediate position, the first display area (42) protrudes at least in sections beyond the upper edge (34) of the support element (36) and the second display area (44) is supported at least in sections by the support element (36).

7. The display device (10) of any one of the preceding claims, wherein the screen apparatus (12) has a touch-sensitive sensor layer.

8. A motor vehicle (52) comprising a display device (10) of any one of the preceding claims.

9. A method for displaying display content using a display device (10), wherein the display device (10) comprises a screen apparatus (12) and a storage volume (14), wherein the screen apparatus (12) is supported through an opening (16) in the storage volume (14) along a predetermined direction of movement (18) between a stowage position and at least one operating position that differs from the stowage position to move out of an interior (30) of the storage volume (14) and into the interior (30) of the storage volume (14), wherein
a support element (36) is provided, which extends along the predetermined direction of movement (18) away from the opening (16) of the interior (30) of the storage volume (14), and is adapted to mechanically support the screen apparatus (12) in a state in which it is at least partially pushed out of the storage volume (14), **characterized in that**
the screen apparatus (12) is provided with a first display area (42) having a first height and a first inherent stiffness and a second display area (44) adjacent to the first display area (42) having a second height and a second inherent stiffness that is reduced relative to the first inherent stiffness, wherein the screen apparatus (12) is arranged in the stowage volume (14) in a curved manner at least in some areas within the second display area (44).

## Revendications

1. Dispositif d'affichage (10) comprenant un écran (12) et un volume de rangement (14), l'écran (12) étant monté de manière à pouvoir être déplacé à travers une ouverture (16) du volume de rangement (14) le long d'une direction de déplacement prédéterminée (18), entre une position de rangement et au moins une position d'utilisation différente de la position de rangement, hors d'un espace intérieur (30) du volume de rangement (14) et dans l'espace intérieur (30) du volume de rangement (14), le dispositif d'affichage (10) comprenant un élément de support (36) qui s'étend le long de la direction de déplacement prédéterminée (18) à partir de l'ouverture (16) en s'éloignant de l'espace intérieur (30) du volume de rangement (14) et qui est destiné à soutenir mécaniquement l'écran (12) dans un état au moins partiellement extrait du volume de rangement (14),
**caractérisé en ce que**
l'écran (12) comprend une première zone d'affichage (42) présentant une première hauteur et une première rigidité propre, ainsi qu'une deuxième zone d'affichage (44) adjacente à la première zone d'affichage (42), présentant une deuxième hauteur et une deuxième rigidité propre inférieure à la première rigidité propre, l'écran (12) étant disposé de manière courbée dans le volume de rangement (14) au moins par sections à l'intérieur de la deuxième zone d'affichage (44).

2. Dispositif d'affichage (10) selon la revendication 1, dans lequel l'élément de support (36) comprend au moins un élément de guidage (40), l'écran (12) étant guidé de manière contrainte au moyen dudit au moins un élément de guidage (40) le long de la direction de déplacement prédéterminée (18), dans le prolongement de l'élément de support (36).

3. Dispositif d'affichage (10) selon l'une des revendications précédentes, comprenant un mécanisme de pivotement (20), le mécanisme de pivotement (20) étant destiné à déplacer l'écran (12) entre la position de rangement et la au moins une position d'utilisation en fonction d'un signal de commande (26).

4. Dispositif d'affichage (10) selon la revendication 3, dans lequel le au moins un mécanisme de pivotement (20) est disposé dans l'espace intérieur (30) du volume de rangement (14) et est destiné à déplacer l'écran (12) de manière continue, depuis la position de rangement vers au moins une position intermédiaire en fonction du signal de commande (26), et à le maintenir dans cette position.

5. Dispositif d'affichage (10) selon l'une des revendications précédentes, dans lequel la première rigidité propre est conférée par une couche de support (46) renforcée matériellement et/ou structurellement, disposée sur l'écran (12) à l'intérieur de la première zone d'affichage (42).

6. Dispositif d'affichage (10) selon l'une des revendications précédentes, dans lequel une hauteur de l'élément de support (36) correspond au moins à la première hauteur de la première zone d'affichage (42), un bord supérieur (32) de la première zone d'affichage (42) affleurant, dans la position de rangement, un bord supérieur (34) de l'élément de support (36) et dans lequel, dans la position d'utilisation et/ou la position intermédiaire, la première zone d'affichage (42) dépasse au moins par sections du bord supérieur (34) de l'élément de support (36) et la deuxième zone d'affichage (44) est soutenue au moins par sections par l'élément de support (36).

7. Dispositif d'affichage (10) selon l'une des revendications précédentes, dans lequel l'écran (12) comporte une couche capteur sensible au toucher.

8. Véhicule automobile (52) comportant un dispositif d'affichage (10) selon l'une des revendications précédentes.

9. Procédé d'affichage de contenus au moyen d'un dispositif d'affichage (10), le dispositif d'affichage (10) comprenant un écran (12) et un volume de rangement (14), l'écran (12) passant à travers une ouverture (16) du volume de rangement (14) le long d'une direction de déplacement prédéterminée (18) entre une position de rangement et au moins une position d'utilisation différente de la position de rangement, hors d'un espace intérieur (30) du volume de rangement (14) et dans l'espace intérieur (30) du volume de rangement (14),
un élément de support (36) est prévu, qui s'étend le long de la direction de déplacement prédéterminée (18) à partir de l'ouverture (16) en s'éloignant de l'espace intérieur (30) du volume de rangement (14) et qui soutient mécaniquement l'écran (12) dans un état au moins partiellement extrait du volume de rangement (14),
l'écran (12) est prévu avec une première zone d'affichage (42) présentant une première hauteur et une première rigidité propre et une deuxième zone d'affichage (44) adjacente à la première zone d'affichage (42) présentant une deuxième hauteur et une deuxième rigidité propre inférieure à la première rigidité propre, l'écran (12) étant disposé de manière courbée dans le volume de rangement (14), au moins par sections à l'intérieur de la deuxième zone d'affichage (44).
